(19)

Europäisches
Patentamt
European
Patent Office
Office européen
des brevets

(11)    **EP 4 603 309 A1**

(12)    **EUROPEAN PATENT APPLICATION**

(43) Date of publication:
**20.08.2025 Bulletin 2025/34**

(21) Application number: **25151838.7**

(22) Date of filing: **14.01.2025**

(51) International Patent Classification (IPC):
**B60H 1/00** $^{(2006.01)}$

(52) Cooperative Patent Classification (CPC):
**B60H 1/00785**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **19.01.2024 JP 2024006969**

(71) Applicant: **MAZDA MOTOR CORPORATION**
**Hiroshima 730-8670 (JP)**

(72) Inventors:
- **Maeda, Tetsuya**
  **Aki-gun, Hiroshima, 730-8670 (JP)**
- **Kaneishi, Junji**
  **Aki-gun, Hiroshima, 730-8670 (JP)**
- **Ochiai, Hiroya**
  **Aki-gun, Hiroshima, 730-8670 (JP)**
- **Yoshida, Makoto**
  **Aki-gun, Hiroshima, 730-8670 (JP)**
- **Masuoka, Hiroaki**
  **Aki-gun, Hiroshima, 730-8670 (JP)**
- **Katsura, Daiji**
  **Aki-gun, Hiroshima, 730-8670 (JP)**

(74) Representative: **Thoma, Michael**
**Lorenz Seidler Gossel**
**Rechtsanwälte Patentanwälte**
**Partnerschaft mbB**
**Widenmayerstraße 23**
**80538 München (DE)**

(54)    **AIR CONDITIONING CONTROL METHOD FOR VEHICLE AND AIR CONDITIONING CONTROL APPARATUS FOR VEHICLE**

(57)    [Problem] To cause an air conditioner to appropriately execute antifogging operation for reducing fogging of a front windshield by accurately grasping the amount of water vapor in a vehicle cabin.

[Means for Solution] An air conditioning control method for a vehicle includes: obtaining a first parameter related to an amount of water vapor entering inside of a vehicle cabin 21 defined by a front windshield 22 and a vehicle cabin forming panel (roof panel 23), and an amount of water vapor exiting from the inside of the vehicle cabin; obtaining a second parameter related to condensation occurring on the vehicle cabin forming panel in the vehicle cabin; calculating an amount of water vapor in the vehicle cabin based on the first parameter and the second parameter; and executing antifogging operation for the front windshield by an air conditioner 3 that blows air-conditioning air into the vehicle cabin, based on the amount of water vapor.

**FIG. 1**

## Description

[Technical Field]

The technique disclosed herein relates to an air conditioning control method for a vehicle, and an air conditioning control apparatus for a vehicle, and a vehicle comprising such air conditioning control apparatus.

[Background Art]

Patent Literature 1 describes a conventional air conditioner. The air conditioner is mounted on a vehicle equipped with an internal combustion engine. The air conditioner performs heating while performing switching between an inside air circulation mode and an outside air introduction mode so as to prevent a windshield from fogging up.

More specifically, the air conditioner includes dew point temperature obtaining means, and glass temperature obtaining means. The dew point temperature obtaining means is installed on the vehicle cabin interior side of the windshield and obtains a dew point temperature from the temperature and the relative humidity of air near the surface of the windshield. The glass temperature obtaining means is installed on the vehicle cabin interior side of the windshield and obtains a glass temperature on the vehicle cabin interior side surface of the windshield.

When the dew point temperature exceeds the glass temperature, window fogging occurs on the windshield. When the dew point temperature exceeds the glass temperature or a temperature threshold that is set to a slightly low value for an allowance, the air conditioner performs switching from the inside air circulation mode to the outside air introduction mode. Since outside air with a small amount of water vapor is introduced into the vehicle cabin, the dew point temperature decreases as the relative humidity decreases.

Patent Literature 2 describes a conventional vehicle having a water-absorbing antifogging film laminated on a vehicle cabin interior side face of a front windshield. The antifogging film absorbs moisture adhering to the film surface to the inside thereof, thereby reducing fogging of the front windshield.

When a water absorption amount of the antifogging film reaches a saturated moisture amount, an air conditioner performs antifogging operation to dehydrate the antifogging film. Specifically, the air conditioner switches to an outside air introduction mode and blows outside air toward the front windshield. Since the antifogging operation of the air conditioner restores the water absorbing function of the antifogging film, the antifogging performance of the front windshield is maintained.

[Citation List]

[Patent Literature]

[Patent Literature 1] Japanese Patent Laid-Open No. 2012-35689
[Patent Literature 2] Japanese Patent Laid-Open No. 2019-26046

[Summary of Invention]

[Problems to be Solved by the Invention]

Since the outside air introduction mode introduces low-temperature outside air, the heating efficiency is reduced. It is required of the air conditioner to minimize the frequency of switching to the outside air introduction mode to the extent that fogging of the front windshield can be prevented.

Unlike the conventional air conditioner described above, an air conditioner mounted on a vehicle that is not equipped with an internal combustion engine, such as a battery electric vehicle (BEV), heats air blown into a vehicle cabin using an electric heater. In the air conditioner of the BEV, the outside air introduction mode significantly increases power consumption. It is required of the air conditioner of the BEV to further reduce the frequency of switching to the outside air introduction mode in order to improve the electricity efficiency of the BEV.

On the other hand, the conventional air conditioner uses a sensor that measures the relative humidity in the vehicle cabin. The sensor that measures humidity typically has a risk of low measurement accuracy in specific situations. For example, the specific situations include a situation in which the volume of air-conditioning air blown to the vicinity of the front windshield is low and/or the temperature of the air-conditioning air is low. Taking into consideration the low humidity measurement accuracy, it is difficult for the conventional air conditioner to reduce the frequency of switching to the outside air introduction mode in maintaining antifogging of the front windshield.

In addition, also in the conventional vehicle having the water-absorbing antifogging film described above, the water absorption amount of the antifogging film is determined based on a measured value of the humidity sensor in the vehicle cabin. Taking into consideration the low humidity measurement accuracy, the frequency of antifogging operation with switching to the outside air introduction mode increases in the conventional air conditioner.

The technique disclosed herein aimes at reducing at least some of the aforementioned problems and more particularly, causes an air conditioner to appropriately execute antifogging operation for reducing fogging of a front windshield by accurately grasping the amount of water vapor in a vehicle cabin.

[Means for Solving the Problems]

The technique disclosed herein relates to an air conditioning control method for a vehicle. This air conditioning control method includes:

> obtaining a first parameter related to an amount of water vapor entering inside of a vehicle cabin defined by a front windshield and a vehicle cabin forming panel, and an amount of water vapor exiting from the inside of the vehicle cabin;
> obtaining a second parameter related to condensation occurring on the vehicle cabin forming panel in the vehicle cabin;
> calculating an amount of water vapor in the vehicle cabin based on the first parameter and the second parameter; and
> executing antifogging operation for the front windshield by an air conditioner that blows air-conditioning air into the vehicle cabin, based on the amount of water vapor.

Fogging of the front windshield is reduced through execution of the antifogging operation for the front windshield by the air conditioner that blows air-conditioning air into the vehicle cabin.

In the air conditioning control method, the first parameter is obtained. The first parameter is a parameter related to the amount of water vapor entering the inside of the vehicle cabin, and the amount of water vapor exiting from the inside of the vehicle cabin.

In addition, in the air conditioning control method, the second parameter related to condensation occurring on the vehicle cabin forming panel is obtained to calculate the amount of water vapor in the vehicle cabin. This is because when condensation occurs on the vehicle cabin forming panel, the amount of water vapor in the vehicle cabin is reduced by the amount of the condensation.

The amount of water vapor in the vehicle cabin is calculated based on the first parameter and the second parameter. Since a humidity sensor is not used or at least not necessary, erroneous measurement of the humidity in the vehicle cabin by a humidity sensor can be avoided. In addition, since the second parameter is taken into consideration, that is, a reduction in the amount of water vapor in the vehicle cabin caused by condensation occurring on the vehicle cabin forming panel is taken into consideration in the calculation of the amount of water vapor, the amount of water vapor in the vehicle cabin can be accurately calculated.

Since the amount of water vapor in the vehicle cabin can be accurately obtained, the air conditioner can appropriately execute the antifogging operation for reducing fogging of the front windshield. The appropriate execution of the antifogging operation, for example, restrains unnecessary execution of the antifogging operation, thereby improving the electricity efficiency or the fuel efficiency of the vehicle.

The second parameter may be a parameter related to condensation occurring on a roof panel serving as the vehicle cabin forming panel in a space between the roof panel and an interior member located closer to the vehicle cabin than the roof panel is.

Air flow is weak in the space between the roof panel and the interior member, and the roof panel is cooled by traveling air. Thus, condensation is likely to occur on the roof panel, and the amount of condensation on the roof panel may be relatively large.

On the other hand, the space between the roof panel and the interior member typically communicates with a space inside the interior member, that is, a space inside the vehicle cabin that is partially defined by the front windshield. Thus, condensation on the roof panel is highly correlated with the amount of water vapor in the space inside the vehicle cabin.

The fact that the second parameter is the parameter related to condensation occurring on the roof panel enables accurate calculation of the amount of water vapor in the vehicle cabin.

The second parameter may be related to an amount of condensation occurring on the vehicle cabin forming panel, and
the amount of water vapor in the vehicle cabin is calculated to be smaller as the amount of condensation increases.

As the amount of condensation occurring on the vehicle cabin forming panel increases, the amount of water vapor in the vehicle cabin decreases. The amount of condensation occurring on the vehicle cabin forming panel is highly correlated with the amount of water vapor in the vehicle cabin. Using the second parameter related to the amount of condensation occurring on the vehicle cabin forming panel in the calculation of the amount of water vapor in the vehicle cabin increases the accuracy of the calculation of the amount of water vapor in the vehicle cabin.

The second parameter related to the amount of condensation may be obtained by processing a captured image of the vehicle cabin forming panel with condensation.

For example, a specific high-contrast pattern is printed on the surface of the vehicle cabin forming panel. When condensation occurs on the vehicle cabin forming panel, scattering of light caused by the condensation changes the appearance of the specific pattern, that is, the contrast of the specific pattern. By processing the captured image of the vehicle cabin forming panel with the condensation, the second parameter related to the amount of condensation occurring on the vehicle cabin forming panel can be obtained based on the change in the contrast.

Note that the specific pattern may be printed on the entire vehicle cabin forming panel or on a part of the vehicle cabin forming panel.

A printed matter printed with a specific pattern may be stuck onto an image-capturing location of the vehicle cabin forming panel. In this case, the printed matter is image-captured. When the printed matter is used, a highly thermally conductive material may be interposed between the vehicle cabin forming panel and the printed matter.

A temperature difference between the printed matter stuck onto the vehicle cabin forming panel and the vehicle cabin forming panel may reduce the accuracy of the calculation of the amount of water vapor. This is because when the temperature of the printed matter differs from the temperature of the vehicle cabin forming panel, the amount of condensation occurring on the printed matter and the amount of condensation occurring on a part of the vehicle cabin forming panel other than the printed matter are not equal to each other.

The highly thermally conductive material between the vehicle cabin forming panel and the printed matter reduces or eliminates the temperature difference between the vehicle cabin forming panel and the printed matter. The amount of condensation occurring on the printed matter and the amount of condensation occurring on a part of the vehicle cabin forming panel other than the printed matter are equal or approximately equal to each other. The second parameter related to the amount of condensation obtained by image-capturing of condensation occurring on the printed matter reflects the amount of condensation occurring on the entire vehicle cabin forming panel. The highly thermally conductive material makes it possible to accurately calculate the amount of water vapor in the vehicle cabin.

The first parameter may include a ventilation amount in the vehicle cabin, a spatial volume in the vehicle cabin, the number of occupants, and an absolute humidity of outside air.

The ventilation amount in the vehicle cabin, the spatial volume in the vehicle cabin, the number of occupants, and the absolute humidity of outside air are related to the amount of water vapor entering the inside of the vehicle cabin and the amount of water vapor exiting from the inside of the vehicle cabin, and contribute to accurate estimation of the amount of water vapor in the vehicle cabin.

The air conditioner may execute the antifogging operation when a dew point based on the amount of water vapor exceeds a temperature of the front windshield.

When the dew point based on the amount of water vapor in the vehicle cabin exceeds the temperature of the front windshield, the front windshield may fog up. The fogging of the front windshield is reduced through execution of the antifogging operation by the air conditioner.

The front windshield may have a water-absorbing antifogging film, and
the air conditioner may execute the antifogging operation when a water absorption amount of the antifogging film calculated based on the amount of water vapor exceeds a saturated moisture amount of the antifogging film.

The water-absorbing antifogging film reduces condensation on the surface of the front windshield (and the surface of the antifogging film) by absorbing moisture. When the water absorption amount of the antifogging film exceeds the saturated moisture amount of the antifogging film, the antifogging film cannot absorb any more water. Condensation occurs on the surface of the antifogging film, which causes fogging of the front windshield. The fogging of the front windshield is reduced through execution of the antifogging operation by the air conditioner.

The air conditioner may execute, as the antifogging operation, at least one of increasing a volume of air-conditioning air blown toward the front windshield, raising a temperature of the air-conditioning air, and increasing a ratio of outside air in the air-conditioning air.

When at least one of increasing the volume of the air-conditioning air blown toward the front windshield, raising the temperature of the air-conditioning air, and increasing the ratio of outside air in the air-conditioning air is executed, the dew point of air near the front windshield is lowered or the surface temperature of glass is raised, and fogging of the front windshield is thus reduced.

In addition, in the case in which the front windshield has the antifogging film, when at least one of increasing the volume of the air-conditioning air blown toward the front windshield, raising the temperature of the air-conditioning air, and increasing the ratio of outside air in the air-conditioning air is executed, the antifogging film is dehydrated. Since the water absorbing function of the antifogging film is restored, fogging of the front windshield is reduced.

An air conditioning control apparatus for a vehicle disclosed herein includes:

an air conditioner that blows air-conditioning air into a vehicle cabin defined by a front windshield and a vehicle cabin forming panel; and

a controller that causes the air conditioner to execute antifogging operation for the front windshield, in which

the controller obtains a first parameter related to an amount of water vapor in the vehicle cabin, and obtains a second parameter related to condensation occurring on the vehicle cabin forming panel in the vehicle cabin, and

the controller calculates the amount of water vapor in the vehicle cabin based on the first parameter and the second parameter, and causes the air conditioner to execute the antifogging operation for the front windshield based on the amount of water vapor.

Since the controller can accurately calculate the amount of water vapor in the vehicle cabin based on the first parameter and the second parameter, the air conditioner can appropriately execute the antifogging operation for reducing fogging of the front windshield. The appropriate execution of the antifogging operation improves the electricity efficiency or the fuel efficiency of the vehicle.

[Advantageous Effect of Invention]

The air conditioning control method and the air conditioning control apparatus for a vehicle described above can appropriately execute the antifogging operation.

[Brief Description of Drawings]

FIG. 1 shows a vehicle equipped with an air conditioning control apparatus according to a first embodiment.
FIG. 2 is a block diagram of the air conditioning control apparatus according to the first embodiment.
FIG. 3 is a diagram for describing a method for obtaining the amount of condensation using a condensation amount sensor.
FIG. 4 shows, on the upper graph, the relationship between the contrast of an image captured by the condensation amount sensor and the amount of condensation on a roof panel, and, on the lower graph, the relationship between the amount of condensation on the roof panel and a dehumidification amount Vc in a vehicle cabin.
FIG. 5 shows a structure of stacking a printed matter printed with a specific pattern onto the roof panel.
FIG. 6 shows a comparison between an estimated value of the amount of water vapor in the vehicle cabin that takes into consideration condensation on the roof panel, an estimated value of the amount of water vapor in the vehicle cabin that does not take into consideration condensation on the roof panel, and an actual measured value of the amount of water vapor in the vehicle cabin.
FIG. 7 is a flowchart of an air conditioning control method according to the first embodiment.
FIG. 8 shows a vehicle equipped with an air conditioning control apparatus according to a second embodiment.
FIG. 9 is a block diagram of the air conditioning control apparatus according to the second embodiment.
FIG. 10 is a flowchart of an air conditioning control method according to the second embodiment.

[Mode for Carrying Out the Invention]

Hereinbelow, embodiments of an air conditioning control method and an air conditioning control apparatus for a vehicle will be described with reference to the drawings. The air conditioning control method and the air conditioning control apparatus described herein are examples.

[First Embodiment]

(Configuration of Air Conditioning Control Apparatus)

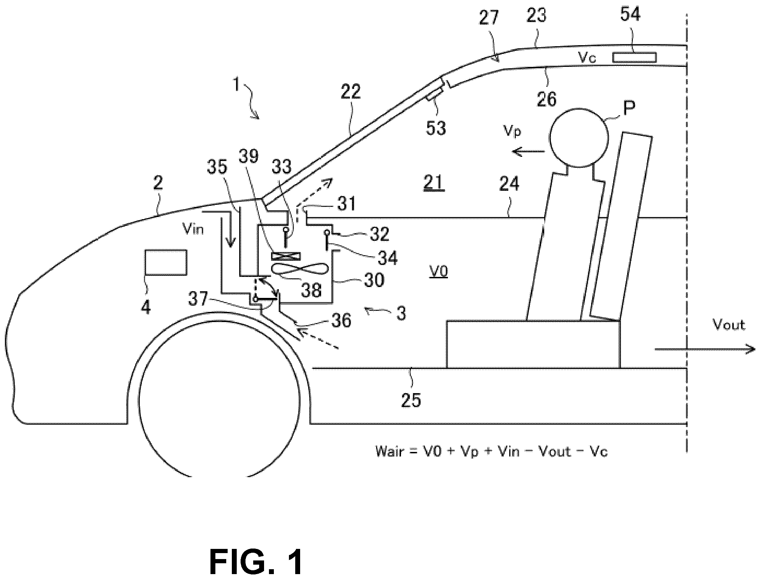

FIG. 1 shows a vehicle 2 equipped with an air conditioning control apparatus 1. The vehicle 2 is, for example, a BEV that is not equipped with an internal combustion engine and travels by electric power of a battery driving a traction motor. The vehicle 2 to which the technique disclosed herein is applicable is not limited to the BEV. The vehicle 2 may be a plug-in hybrid electric vehicle (PHEV) equipped with an internal combustion engine. The vehicle 2 may also be a hybrid electric vehicle (HEV) or an internal combustion engine (ICE) vehicle that travels by a driving force of an internal combustion engine.

A vehicle cabin 21 of the vehicle 2 is defined by a front windshield 22, and a vehicle cabin forming panel. The vehicle cabin forming panel includes at least a roof panel 23, a door panel 24, and a floor panel 25. An interior member 26 is located closer to the vehicle cabin than the roof panel 23 is. The interior member 26 constitutes a ceiling portion in the vehicle cabin 21. A space 27 is formed between the roof panel 23 and the interior member 26. Note that, in the present embodiment, the space 27 is a part of the vehicle cabin 21. The space 27 communicates with the inside of the vehicle cabin 21 that is partially defined by the front windshield 22.

The vehicle 2 is equipped with an air conditioner 3. The air conditioner 3 performs air conditioning in the vehicle cabin 21 by blowing air-conditioning air into the vehicle cabin 21.

The air conditioner 3 includes a case 30. The case 30 has a defroster outlet port 31, and a vehicle cabin outlet port 32. As indicated by a broken arrow in FIG. 1, the defroster outlet port 31 allows air-conditioning air to be blown out along a face of the front windshield 22 facing the vehicle cabin 21. The vehicle cabin outlet port 32 allows air-conditioning air to be blown out toward the inside of the vehicle cabin 21 where an occupant P is seated.

The air conditioner 3 has a defroster outlet port door 33, and a vehicle cabin outlet port door 34. The defroster outlet port door 33 opens and closes the defroster outlet port 31. The vehicle cabin outlet port door 34 opens and closes the vehicle cabin outlet port 32.

The case 30 has an outside air inlet port 35, and an inside air circulation port 36. As indicated by a solid arrow in FIG. 1, the outside air inlet port 35 introduces air outside the vehicle cabin 21 into the case 30. As indicated by a broken arrow in FIG. 1, the inside air circulation port 36 introduces air inside the vehicle cabin 21 into the case 30.

The air conditioner 3 includes a switching valve 37. The switching valve 37 adjusts an opening degree of the outside air inlet port 35 and an opening degree of the inside air circulation port 36 (refer to a double-headed arrow in FIG. 1). When the switching valve 37 increases the opening degree of the outside air inlet port 35, the opening degree of the inside air circulation port 36 decreases, and when the opening degree of the outside air inlet port 35 decreases, the opening degree of the inside air circulation port 36 increases. The switching valve 37 adjusts the ratio of outside air and the ratio of inside air in the air-conditioning air blown into the vehicle cabin 21.

The air conditioner 3 includes a blower 38. The blower 38 is located inside the case 30. When the blower 38 operates, air introduced into the case 30 through the outside air inlet port 35 and/or the inside air circulation port 36 is blown out through the defroster outlet port 31 or the vehicle cabin outlet port 32.

The air conditioner 3 includes a heater 39. The heater 39 is located downstream of the blower 38 inside the case 30. The heater 39 heats air blown out through the defroster outlet port 31 or the vehicle cabin outlet port 32. The heater 39 mounted on the vehicle 2, which is the BEV, is an electric heater. The battery supplies electric power to the electric heater.

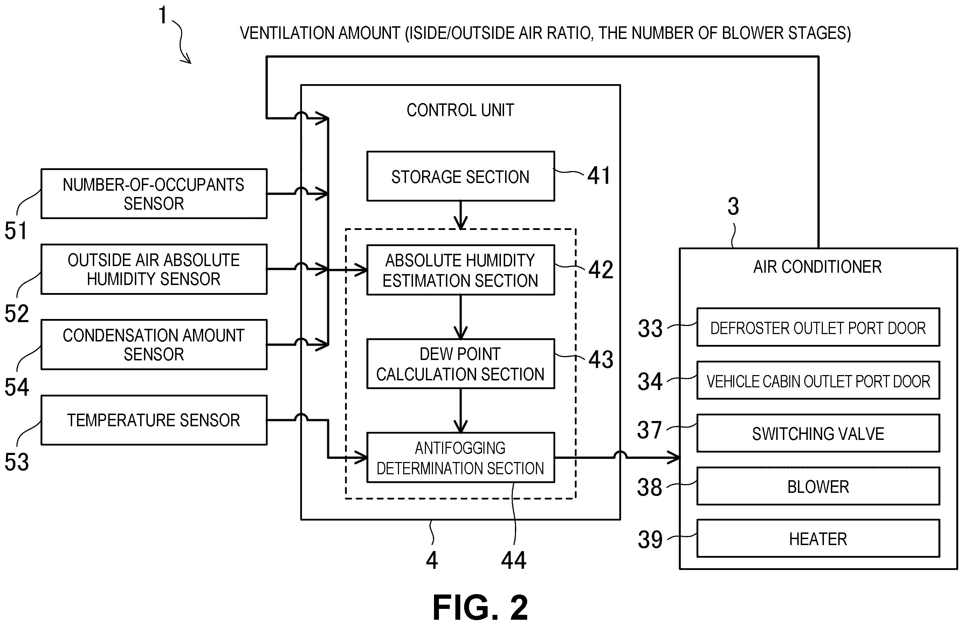

FIG. 2 is a block diagram of the air conditioning control apparatus 1. The air conditioning control apparatus 1 includes a control unit 4. The control unit 4 is an example of a controller. The control unit 4 includes a microcomputer having a processor and a memory, and a storage section 41. The storage section 41 stores various pieces of information used for antifogging operation of the air conditioner 3, which will be described further below. The control unit 4 causes the microcomputer to implement functions, which will be described further below, while using the information stored in the storage section 41.

The air conditioning control apparatus 1 includes various sensors. The various sensors include a number-of-occupants sensor 51, an outside air absolute humidity sensor 52, a temperature sensor 53, and a condensation amount sensor 54.

The number-of-occupants sensor 51 measures the number of people riding in the vehicle 2. The number-of-occupants sensor 51 is, for example, a load sensor attached to a seat or a sensor that detects wearing of a seat belt.

The outside air absolute humidity sensor 52 measures the absolute humidity of outside air outside the vehicle cabin 21.

As shown in FIG. 1, the temperature sensor 53 is located on the front windshield 22 and measures the temperature of the front windshield 22.

(Structure of Condensation Amount Sensor)

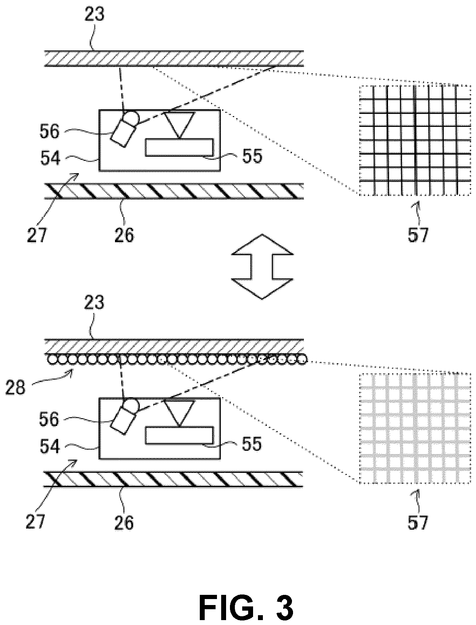

The condensation amount sensor 54 relates to obtaining a parameter related to the amount of condensation occurring on the roof panel 23. As shown in FIG. 1, the condensation amount sensor 54 is located in the space 27 between the roof panel 23 and the interior member 26. FIG. 3 shows the condensation amount sensor 54. The condensation amount sensor 54 includes a camera module 55. The camera module 55 includes a lens, and an image sensor that converts light passing through the lens into an electric signal and outputs the electric signal. The condensation amount sensor 54 performs image-capturing of a vehicle cabin side face of the roof panel 23. The condensation amount sensor 54 includes a lighting device 56. This is because the space 27 is dark. The lighting device 56 illuminates at least an image-capturing area of the camera module 55 on the vehicle cabin side face of the roof panel 23.

Here, a specific pattern 57 is provided at least in the image-capturing area of the camera module 55 on the vehicle cabin side face of the roof panel 23. The specific pattern 57 is a high-contrast pattern, and may be a grid as illustrated in FIG. 3. Note that the specific pattern is not limited to the grid. The specific pattern 57 may be directly printed on the vehicle cabin side face of the roof panel 23.

The lighting device 56 illuminates the specific pattern 57. The camera module 55 performs image-capturing of the specific pattern 57. When no condensation occurs on the roof panel 23, as shown in the upper drawing of FIG. 3, the contrast of an image of the specific pattern 57 captured by the camera module 55 is high. As shown in the lower drawing of FIG. 3, when condensation 28 occurs on the roof panel 23, the contrast of an image of the specific pattern 57 captured by the camera module 55 is low because the condensation scatters light.

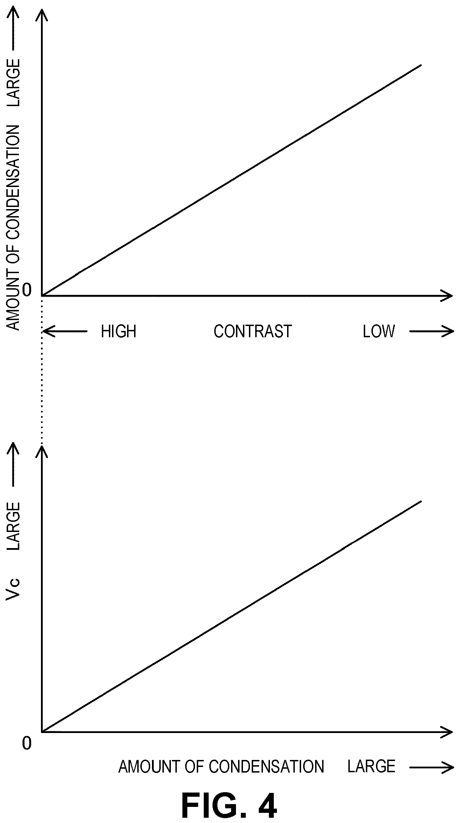

The control unit 4 processes a signal from the condensation amount sensor 54, that is, the image of the specific pattern 57 captured by the camera module 55, and determines the amount of condensation occurring on the roof panel 23 based on the contrast of the image. The upper graph of FIG. 4 illustrates the relationship between the contrast of the image and the amount of condensation. When the contrast of the image is high, the amount of condensation is small. When the contrast of the image is low, the amount of condensation is large. Note that the relationship between the contrast of the image and the amount of condensation is not limited to a linear relationship as shown in the upper graph of FIG. 4.

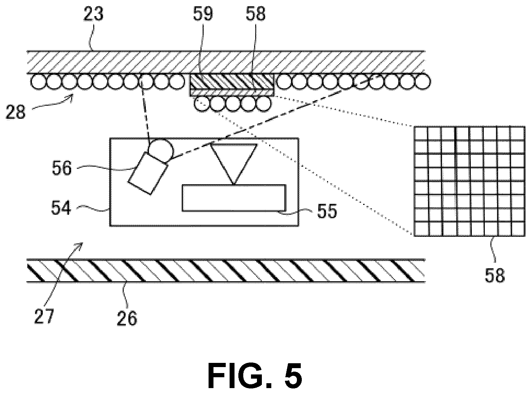

FIG. 5 shows a modification relating to the condensation amount sensor 54. The specific pattern 57 of the roof panel 23 may not be directly printed on the roof panel 23, and a printed matter 58 printed with the specific pattern may be stuck onto the vehicle cabin side face of the roof panel 23. A highly thermally conductive material 59 is interposed between the roof panel 23 and the printed matter 58. In addition to the function of sticking the printed matter 58 onto the roof panel 23, the highly thermally conductive material 59 has the function of making the temperature of the roof panel 23 and the temperature of the printed matter 58 equal or approximately equal to each other. When the temperature of the roof panel 23 and the temperature of the printed matter 58 are equal or approximately equal to each other, the amount of condensation occurring on the printed matter 58 and the amount of condensation occurring on a part of the roof panel 23 other than the printed matter 58 are equal or approximately equal to each other. The amount of condensation obtained by image-capturing, by the camera module 55, of condensation occurring on the printed matter 58 reflects the amount of condensation occurring on the entire roof panel 23. The use of the highly thermally conductive material 59 enables the control unit 4 to accurately calculate the amount of water vapor in the vehicle cabin 21 based on the signal of the condensation amount sensor 54 as will be described further below.

(Calculation of Amount of Water Vapor inside Vehicle Cabin)

The air conditioning control method and the air conditioning control apparatus 1 disclosed herein can accurately calculate the amount of water vapor in the vehicle cabin 21. The accurate calculation of the amount of water vapor enables the air conditioner 3 to appropriately execute the antifogging operation. The appropriate execution of the antifogging operation restrains deterioration in the electricity efficiency of the vehicle 2. Note that the antifogging operation is the operation of the air conditioner 3 to reduce fogging of the front windshield 22.

As shown in FIG. 2, the control unit 4 has, as functional blocks, an absolute humidity estimation section 42, a dew point calculation section 43, and an antifogging determination section 44.

The absolute humidity estimation section 42 calculates the amount of water vapor in the vehicle cabin 21 and estimates the absolute humidity in the vehicle cabin 21 based on the calculated amount of water vapor. The absolute humidity estimation section 42 uses signals of the number-of-occupants sensor 51, the outside air absolute humidity sensor 52, and the condensation amount sensor 54, and information on a ventilation amount of air in the vehicle cabin 21 to calculate the amount of water vapor.

As shown in FIG. 1, the signal of the number-of-occupants sensor 51 is related to an expiration water vapor amount Vp discharged into the vehicle cabin 21 by the expiration of the occupant P. The expiration water vapor amount Vp increases as the number of occupants increases.

The signal of the outside air absolute humidity sensor 52 is related to a water vapor amount Vin of outside air entering the inside of the vehicle cabin 21. The outside air water vapor amount Vin is also related to the ventilation amount of air in the vehicle cabin 21. The ventilation amount of air in the vehicle cabin 21 is related to an inside/outside air ratio and the number of blower stages of the air conditioner 3 and an exhaust water vapor amount Vout from the vehicle cabin 21. The inside/outside air ratio is the ratio between outside air introduced into the vehicle cabin 21 through the outside air inlet port 35 and inside air circulating in the vehicle cabin 21 through the inside air circulation port 36, and is related to the ratio of opening degree of the switching valve 37 between the outside air inlet port 35 and the inside air circulation port 36. The number of blower stages is related to the flow rate of air-conditioning air blown into the vehicle cabin 21 through the defroster outlet port 31 and/or the vehicle cabin outlet port 32.

The signal of the condensation amount sensor 54 is related to a dehumidification amount Vc of air in the vehicle cabin 21. The signal of the condensation amount sensor 54 is related to the amount of condensation occurring on the roof panel 23 as described above. Condensation on the roof panel 23 reduces water vapor in the vehicle cabin 21. The lower graph of FIG. 4 shows the relationship between the amount of condensation occurring on the roof panel 23 and the dehumidification amount Vc. As the amount of condensation increases, the dehumidification amount Vc increases. The relationship between the amount of condensation and the dehumidification amount Vc or the relationship between the contrast of the image of the condensation amount sensor 54 and the dehumidification amount Vc may be set based on an actual measured value measured in advance. Note that the relationship between the amount of condensation and the dehumidification amount Vc is not limited to a linear relationship. The storage section 41 stores the relationship between the contrast and the amount of condensation and the relationship between the amount of condensation and the dehumidification amount Vc shown in FIG. 4. The storage section 41 may store the relationship between the contrast of the image of the condensation amount sensor 54 and the dehumidification amount Vc.

An amount of water vapor Wair in the vehicle cabin 21 is calculated by subtraction between the amount of water vapor entering the vehicle cabin 21 and the amount of water vapor exiting from the vehicle cabin 21 using the following formula (1). Note that V0 is the amount of exiting water vapor in the vehicle cabin 21.

$$\mathtt{Wair\ =\ V0\ +\ Vp\ +\ Vin\ -\ Vout\ -\ Vc\quad(1)}$$

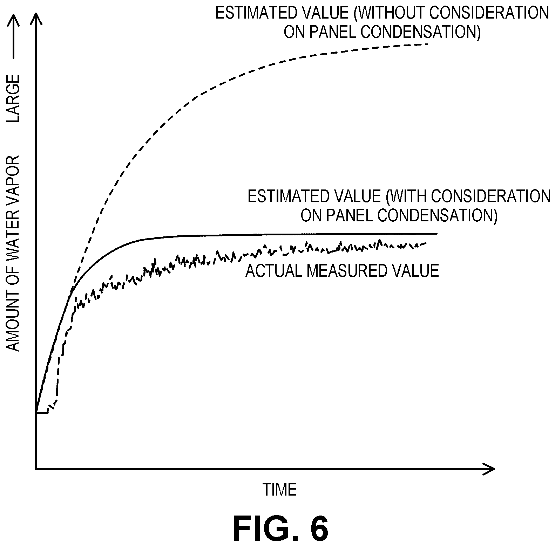

Here, FIG. 6 compares an estimated value of the amount of water vapor in the vehicle cabin 21 (a solid line in FIG. 6) that is estimated in accordance with formula (1) with an actual measured value of the amount of water vapor in the vehicle cabin 21 that is actually measured. Formula (1) can accurately estimate the amount of water vapor in the vehicle cabin 21. A broken line in FIG. 6 shows an estimated value of the amount of water vapor when the term of the dehumidification amount Vc is omitted in formula (1). When the amount of condensation occurring on the roof panel 23 is not taken into consideration, an estimated amount of water vapor in the vehicle cabin 21 is larger than an actual amount of water vapor. In other words, condensation that occurs on the roof panel 23 has a large influence on the amount of water vapor in the vehicle cabin 21. Taking into consideration the dehumidification amount Vc based on the signal of the condensation amount sensor 54 makes it possible to accurately estimate the amount of water vapor in the vehicle cabin 21.

The absolute humidity estimation section 42 estimates the absolute humidity of the vehicle cabin 21 from the amount of water vapor Wair in the vehicle cabin 21 calculated in accordance with formula (1) and information on the volume of the vehicle cabin 21. Note that the storage section 41 stores the information on the volume of the vehicle cabin 21.

The dew point calculation section 43 calculates the dew point based on the absolute humidity in the vehicle cabin 21 estimated by the absolute humidity estimation section 42.

The antifogging determination section 44 determines whether antifogging operation of the air conditioner 3 is required. The antifogging determination section 44 makes the determination based on the dew point calculated by the dew point calculation section 43 and the signal of the temperature sensor 53. The temperature sensor 53 measures the temperature of the front windshield 22 as described above. When the temperature of the front windshield 22 falls below the dew point, the antifogging determination section 44 determines that antifogging operation is required because the front windshield 22 may fog up. When the antifogging determination section 44 determines that antifogging operation is required, the control unit 4 instructs the air conditioner 3 to execute antifogging operation.

The air conditioner 3 executes, as the antifogging operation, at least one of:

(1) increasing the number of blower stages to increase the volume of air-conditioning air blown toward the front windshield 22;
(2) increasing the flow rate through the heater 39 to raise the temperature of the air-conditioning air blown toward the front windshield 22; and
(3) adjusting the angle of the switching valve 37 to increase the outside air ratio.

The antifogging operation of the air conditioner 3 lowers the dew point of air near the front windshield 22 or raises the surface temperature of glass. As a result, fogging of the front windshield 22 is reduced.

(Control on Air Conditioning Apparatus)

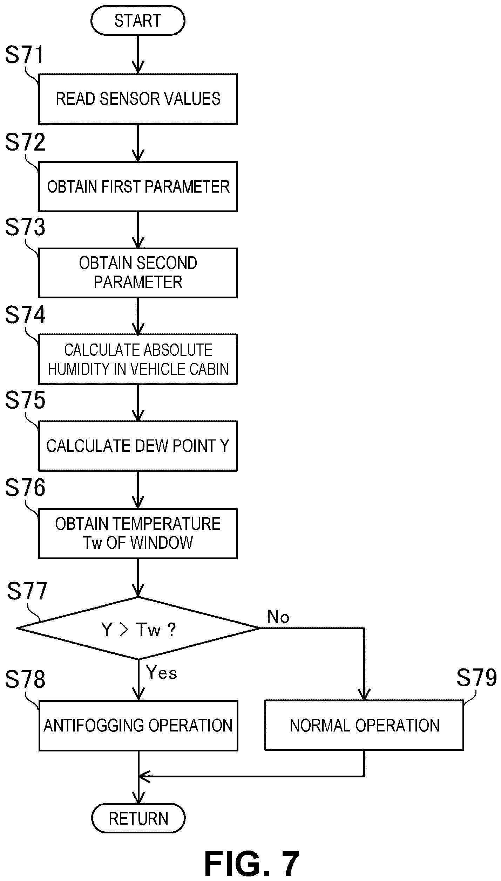

FIG. 7 is a flowchart relating to control that is executed by the control unit 4 on the air conditioner 3. In step S71 after start, the control unit 4 reads sensor values. In subsequent step S72, the control unit 4 obtains a first parameter. The first parameter includes the ventilation amount in the vehicle cabin 21, the spatial volume in the vehicle cabin 21, the number of occupants, and the absolute humidity of outside air. The first parameter includes V0, Vp, Vin, and Vout described above.

In step S73, the control unit 4 obtains a second parameter. The second parameter is the contrast of an image obtained by the condensation amount sensor 54, the amount of condensation occurring on the roof panel 23, or the dehumidification amount Vc.

In step S74, the control unit 4 calculates an absolute humidity in the vehicle cabin 21 based on the first parameter and the second parameter, using formula (1) and the spatial volume in the vehicle cabin 21.

The control unit 4 calculates a dew point Y from the calculated absolute humidity in step S75, and obtains a temperature Tw of the front windshield 22 from the signal of the temperature sensor 53 in step S76.

In step S77, the control unit 4 determines whether the temperature Tw is lower than the dew point Y. When the determination in step S77 is No, the control unit 4 causes the air conditioner 3 to perform normal operation in step S79. When the determination in step S77 is Yes, the control unit 4 causes the air conditioner 3 to perform antifogging operation in step S78. Fogging of the front windshield 22 is reduced.

By not using a humidity sensor that measures the humidity in the vehicle cabin, the air conditioning control apparatus 1 can avoid erroneous measurement of the sensor. The air conditioning control apparatus 1 can accurately calculate the amount of water vapor in the vehicle cabin 21. The air conditioning control apparatus 1 can cause the air conditioner 3 to appropriately perform antifogging operation.

As described above, in the antifogging operation, the air conditioner 3 executes at least one of: (1) increasing the number of blower stages to increase the amount of air-conditioning air blown toward the front windshield 22; (2) increasing the flow rate through the heater 39 to raise the temperature of the air-conditioning air blown toward the front windshield 22; and (3) adjusting the angle of the switching valve 37 to increase the outside air ratio. The air conditioner 3, for example, takes in a large amount of low-temperature outside air, then raises temperature using the heater 39, and blows air-conditioning air at a high flow rate toward the front windshield 22. The antifogging operation increases the power consumption of the air conditioner 3. Unnecessary antifogging operation reduces the electricity efficiency of the BEV. Appropriate execution of the antifogging operation prevents a reduction in the electricity efficiency of the BEV while achieving antifogging of the front windshield 22.

The air conditioning control apparatus 1 uses the amount of condensation occurring on the roof panel 23 to calculate the amount of water vapor in the vehicle cabin 21. Air flow is weak in the space 27 between the roof panel 23 and the interior member 26, and the roof panel 23 is cooled by traveling air. Thus, condensation is likely to occur on the roof panel 23, and the amount of condensation on the roof panel 23 may be relatively large.

On the other hand, the space 27 between the roof panel 23 and the interior member 26 communicates with the space inside the vehicle cabin 21 that is partially defined by the front windshield 22. Thus, condensation on the roof panel 23 is highly correlated with the amount of water vapor in the space inside the vehicle cabin 21.

Taking into consideration the amount of condensation occurring on the roof panel 23 makes it possible to accurately calculate the amount of water vapor in the vehicle cabin 21.

Note that, instead of taking into consideration the amount of condensation on the roof panel 23 or in addition to taking into consideration the amount of condensation on the roof panel 23, the air conditioning control apparatus 1 may calculate the amount of water vapor in the vehicle cabin 21 taking into consideration the amount of condensation on the door panel 24 serving as the vehicle cabin forming panel or may calculate the amount of water vapor in the vehicle cabin 21 taking into consideration the amount of condensation on the floor panel 25. The door panel 24 or the floor panel 25 is also relatively prone to condensation between the door panel 24 or the floor panel 25 and the interior member, and the condensation occurring on these panels is highly correlated with the amount of water vapor in the space inside the vehicle cabin 21.

[second Embodiment]

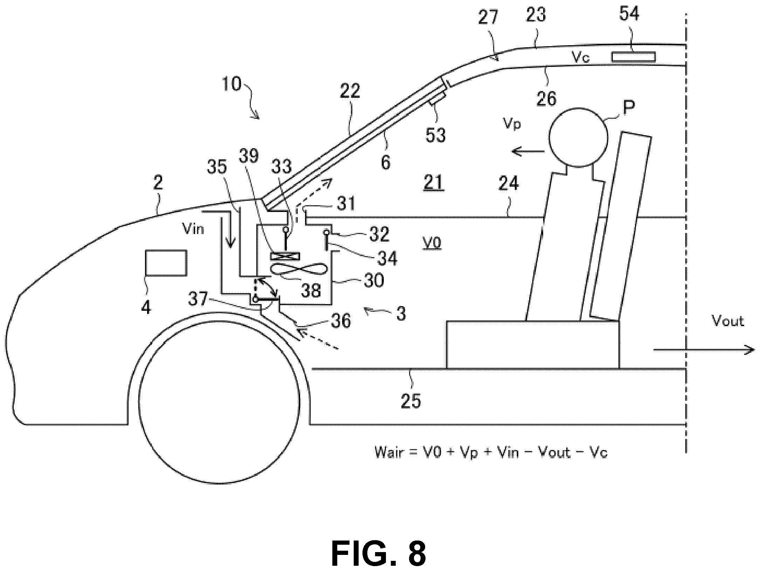

FIG. 8 shows the vehicle 2 equipped with an air conditioning control apparatus 10 according to a second embodiment. In the second embodiment, the front windshield 22 has an antifogging film 6. The antifogging film 6 is stuck onto the vehicle cabin side face of the front windshield 22. The antifogging film 6 is a water-absorbing antifogging film. The antifogging film 6 absorbs condensation that occurs near the front windshield 22. The absorption of condensation reduces fogging of the front windshield 22.

When the antifogging film 6 reaches a saturated moisture amount, the antifogging film 6 cannot absorb any more moisture. When the antifogging film 6 reaches the saturated moisture amount, the air conditioner 3 dehydrates the antifogging film 6. When the antifogging film 6 is dehydrated, the water absorbing function is restored. The antifogging film 6 can reduce fogging of the front windshield 22. Antifogging operation of the air conditioner 3 in the air conditioning control apparatus 10 of the second embodiment means dehydration operation for the antifogging film 6.

The antifogging film 6 eliminates the necessity of the antifogging operation of the air conditioner 3 in the first embodiment, that is, the operation of the air conditioner 3 to lower the dew point of air near the front windshield 22 when the temperature of the front windshield 22 falls below the dew point. This is because the antifogging film 6 absorbs condensation even when the temperature of the front windshield 22 falls below the dew point. The frequency of the dehydration operation for the antifogging film 6 performed by the air conditioner 3 is lower than the frequency of the antifogging operation of the air conditioner 3 in the first embodiment. The antifogging film 6 is advantageous in improving the electricity efficiency of the BEV.

The air conditioning control apparatus 10 disclosed herein accurately calculates the amount of water vapor in the vehicle cabin 21 and can thus accurately determine a water absorption amount of the antifogging film 6. Since the execution of unnecessary dehydration operation can be reduced, the air conditioning control apparatus 10 further improves the electricity efficiency of the BEV.

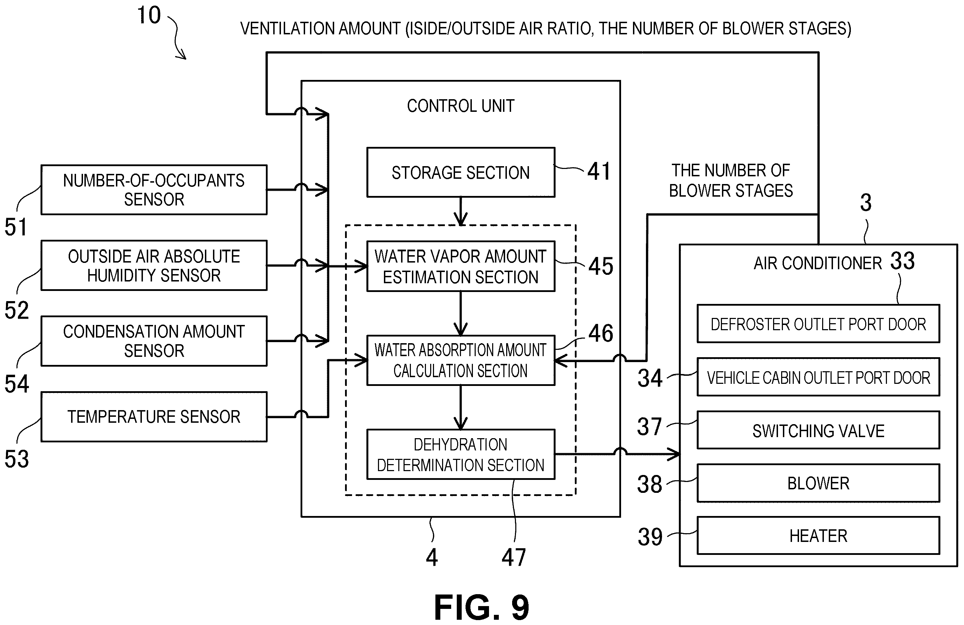

FIG. 9 shows a block diagram of the air conditioning control apparatus 10. The control unit 4 has, as functional blocks, a water vapor amount estimation section 45, a water absorption amount calculation section 46, and a dehydration determination section 47.

The water vapor amount estimation section 45 calculates the amount of water vapor in the vehicle cabin 21 in accordance with formula (1) described above. Since the dehumidification amount Vc based on the amount of condensation on the roof panel 23, that is, the second parameter is taken into consideration, the water vapor amount estimation section 45 can accurately estimate the amount of water vapor in the vehicle cabin 21.

The water absorption amount calculation section 46 calculates the water absorption amount of the antifogging film 6. Specifically, the water absorption amount calculation section 46 estimates the amount of condensation that occurs near the front windshield 22 based on the amount of water vapor in the vehicle cabin 21, a saturated water vapor amount of air near the front windshield 22, and the velocity of air-conditioning air blown into the vehicle cabin 21. Then, the water absorption amount calculation section 46 calculates the water absorption amount of the antifogging film 6 by adding up the estimated condensation amount, assuming that the condensation is absorbed by the antifogging film 6.

Note that the saturated water vapor amount of air near the front windshield 22 is based on the signal of the temperature sensor 53. As described above, the temperature sensor 53 measures the temperature of the front windshield 22 (and the antifogging film 6). The velocity of the air-conditioning air is based on the number of blower stages of the air conditioner 3.

Specifically, the water absorption amount calculation section 46 estimates the amount of condensation near the front windshield 22 from the following formula (2).

$$\text{Amount of condensation} = (\text{Wair} - \text{Wh}) \times \alpha\ (V) \qquad (2)$$

Here, Wair is the amount of water vapor in the vehicle cabin 21, Wh is the saturated water vapor amount of air near the front windshield 22, V is the velocity of the air-conditioning air, and a is a parameter that is calculated from the surface area of the front windshield 22 and the air velocity near the front windshield 22. The time integral of the amount of condensation calculated by formula (2) is the water absorption amount of the antifogging film 6.

The dehydration determination section 47 determines whether dehydration of the antifogging film 6 by the air conditioner 3 is required. The dehydration determination section 47 makes the determination based on the water absorption amount calculated by the water absorption amount calculation section 46 and a saturated moisture amount of the antifogging film 6. The saturated moisture amount of the antifogging film 6 is determined from the material of the antifogging film 6. The storage section 41 stores the saturated moisture amount of the antifogging film 6.

When the water absorption amount of the antifogging film 6 exceeds the saturated moisture amount of the antifogging film 6, the dehydration determination section 47 determines that dehydration operation of the air conditioner 3 is required. When the dehydration determination section 47 determines that the dehydration operation is required, the control unit 4 instructs the air conditioner 3 to execute dehydration operation.

The air conditioner 3 executes, as the dehydration operation, at least one of:

(1) increasing the number of blower stages to increase the amount of air-conditioning air blown toward the front windshield 22;

(2) increasing the flow rate through the heater 39 to raise the temperature of the air-conditioning air blown toward the front windshield 22; and

(3) adjusting the angle of the switching valve 37 to increase the outside air ratio.

Since the dehydration operation of the air conditioner 3 releases moisture absorbed by the antifogging film 6 into the air, the antifogging film 6 is dehydrated. The dehydration of the antifogging 6 restores the water absorbing function of the antifogging film 6, thereby reducing fogging of the front windshield 22.

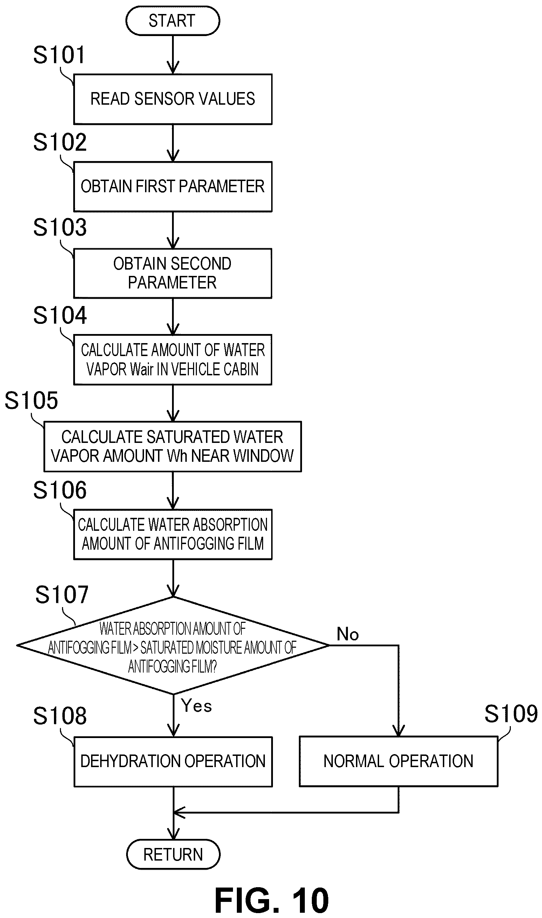

FIG. 10 is a flowchart relating to control that is executed by the control unit 4 on the air conditioner 3 in the air conditioning control apparatus 10. In step S101 after start, the control unit 4 reads sensor values. In subsequent step S102, the control unit 4 obtains a first parameter. The first parameter includes the ventilation amount in the vehicle cabin 21, the spatial volume in the vehicle cabin 21, the number of occupants, and the absolute humidity of outside air. The first parameters include V0, Vp, Vin, and Vout described above.

In step S103, the control unit 4 obtains a second parameter. The second parameter is the contrast of an image obtained by the condensation amount sensor 54, the amount of condensation occurring on the roof panel 23, or the dehumidification amount Vc.

In step S104, the control unit 4 calculates the amount of water vapor Wair in the vehicle cabin 21 based on the first parameter and the second parameter using formula (1).

In step S105, the control unit 4 calculates the saturated water vapor amount Wh of air near the front windshield 22 based on the signal of the temperature sensor 53. Then, in step S106, the control unit 4 calculates the water absorption amount of the antifogging film 6 based on the amount of water vapor Wair in the vehicle cabin 21, the saturated water vapor amount Wh of air near the front windshield 22, and the number of blower stages, using formula (2), and adds up the water absorption amount.

In step S107, the control unit 4 determines whether the water absorption amount of the antifogging film 6 exceeds the saturated moisture amount of the antifogging film 6. When the determination in step S107 is No, the control unit 4 causes the air conditioner 3 to perform normal operation in step S109. When the determination of step S107 is Yes, the control unit 4 causes the air conditioner 3 to perform dehydration operation in step S108. The antifogging film 6 is dehydrated, and fogging of the front windshield 22 is reduced.

The air conditioning control apparatus 10 can also avoid erroneous measurement of a sensor by not using a humidity sensor that measures the humidity in the vehicle cabin. The air conditioning control apparatus 10 can accurately calculate the amount of water vapor in the vehicle cabin 21. The air conditioning control apparatus 10 can cause the air conditioner 3 to appropriately execute the dehydration operation.

The air conditioning control apparatus 10 also uses the amount of condensation occurring on the roof panel 23 to calculate the amount of water vapor in the vehicle cabin 21. Taking into consideration the amount of condensation occurring on the roof panel 23 makes it possible to accurately calculate the amount of water vapor in the vehicle cabin 21.

The antifogging film 6 allows a state in which the amount of water vapor in the vehicle cabin 21 is large. This is because the antifogging film 6 absorbs condensation that occurs near the front windshield 22. When the amount of water vapor in the vehicle cabin 21 is large, condensation is likely to occur on the surface of the roof panel 23. This enables the condensation amount sensor 54 to easily measure the amount of condensation occurring on the roof panel 23, and the air conditioning control apparatus 10 can more accurately calculate the amount of water vapor in the vehicle cabin 21.

As with the antifogging operation, the dehydration operation executes at least one of: (1) increasing the number of blower stages to increase the amount of air-conditioning air blown toward the front windshield 22; (2) increasing the flow rate through the heater 39 to raise the temperature of the air-conditioning air blown toward the front windshield 22; and (3) adjusting the angle of the switching valve 37 to increase the outside air ratio. The dehydration operation increases the power consumption of the air conditioner 3. Unnecessary dehydration operation reduces the electricity efficiency of the BEV. Appropriate execution of the dehydration operation prevents a reduction in the electricity efficiency of the BEV while achieving antifogging of the front windshield 22.

Note that, instead of taking into consideration the amount of condensation on the roof panel 23 or in addition to taking into consideration the amount of condensation on the roof panel 23, the air conditioning control apparatus 10 may calculate the amount of water vapor in the vehicle cabin 21 taking into consideration the amount of condensation on the door panel 24 serving as the vehicle cabin forming panel or may calculate the amount of water vapor in the vehicle cabin 21 taking into consideration the amount of condensation on the floor panel 25.

[Reference Signs List]

1   air conditioning control apparatus
10   air conditioning control apparatus
21   vehicle cabin
22   front windshield
23   roof panel (vehicle cabin forming panel)
24   door panel (vehicle cabin forming panel)
25   floor panel (vehicle cabin forming panel)
26   interior member
27   space
3   air conditioner
4   control unit (controller)
57   specific pattern
58   printed matter
59   highly thermally conductive material
6   antifogging film

**Claims**

1.   An air conditioning control method for a vehicle comprising:

obtaining a first parameter related to an amount of water vapor entering inside of a vehicle cabin (21) defined by a front windshield (22) and a vehicle cabin forming panel, and an amount of water vapor exiting from the inside of the vehicle cabin (21);

obtaining a second parameter related to condensation occurring on the vehicle cabin forming panel in the vehicle cabin (21);

calculating an amount of water vapor in the vehicle cabin (21) based on the first parameter and the second parameter; and

executing antifogging operation for the front windshield (22) by an air conditioner (3) that blows air-conditioning air into the vehicle cabin (21), based on the amount of water vapor.

2. The air conditioning control method for a vehicle according to claim 1, wherein
the second parameter is a parameter related to and/or indicative of condensation occurring on a roof panel (23) serving as the vehicle cabin forming panel in a space (27) between the roof panel (23) and an interior member (26) located closer to the vehicle cabin (21) than the roof panel (23) is.

3. The air conditioning control method for a vehicle according to claim 1 or 2, wherein

the second parameter is related to and/or indicative of an amount of condensation occurring on the vehicle cabin forming panel, and
the amount of water vapor in the vehicle cabin (21) is calculated to be smaller as the amount of condensation increases.

4. The air conditioning control method for a vehicle according to claim 3, wherein
the second parameter related to and/or indicative of the amount of condensation is obtained by processing a captured image of the vehicle cabin forming panel with condensation.

5. The air conditioning control method for a vehicle according to claim 4, wherein

a printed matter (58) printed with a specific pattern (57) is stuck onto an image-capturing location of the vehicle cabin forming panel, and
a highly thermally conductive material (59) is interposed between the vehicle cabin forming panel and the printed matter (58).

6. The air conditioning control method for a vehicle according to anyone of the preceeding claims, wherein
the first parameter includes and/or is indicative of a ventilation amount in the vehicle cabin (21), a spatial volume in the vehicle cabin (21), the number of occupants, and an absolute humidity of outside air.

7. The air conditioning control method for a vehicle according to anyone of the preceeding claims, wherein
the air conditioner (3) executes the antifogging operation when a dew point based on the amount of water vapor exceeds a temperature of the front windshield (22).

8. The air conditioning control method for a vehicle according to anyone of the preceeding claims, wherein

the front windshield (22) has a water-absorbing antifogging film (6), and
the air conditioner (3) executes the antifogging operation when a water absorption amount of the antifogging film (6) calculated based on the amount of water vapor exceeds a saturated moisture amount of the antifogging film (6).

9. The air conditioning control method for a vehicle according to claim 7 or 8, wherein
the air conditioner (3) executes, as the antifogging operation, at least one of increasing a volume of air-conditioning air blown toward the front windshield (22), raising a temperature of the air-conditioning air, and increasing a ratio of outside air in the air-conditioning air.

10. An air conditioning control apparatus (1; 10) for a vehicle comprising:

an air conditioner (3) that blows air-conditioning air into a vehicle cabin (21) defined by a front windshield (22) and a vehicle cabin forming panel; and
a controller (4) that is configured to cause the air conditioner (3) to execute antifogging operation for the front windshield (22), wherein

the controller (4) is configured to obtain a first parameter related to an amount of water vapor in the vehicle cabin (21), and obtains a second parameter related to condensation occurring on the vehicle cabin forming panel in the vehicle cabin (21), and
the controller (4) is configured to calculate the amount of water vapor in the vehicle cabin (21) based on the first parameter and the second parameter, and causes the air conditioner (3) to execute the antifogging operation for the front windshield (22) based on the amount of water vapor.

11. The air conditioning control apparatus (1; 10) of claim 10, further comprising at least two of the following sensors: a number-of-occupants-sensor (51), an outside-air-absolute-humidity-sensor (52), a condensation-amount-sensor (53) and a temperature sensor (54), wherein the controller (4) is configured to determine said first and second parameters from at least two sensor values of said sensors.

12. The air conditioning control apparatus (1; 10) of claim 10 or 11, wherein the controller (4) is configured to calculate the amount of water vapor in the vehicle cabin (21) without using a sensor signal from a humidity sensor in the vehicle cabin (21), and to cause the air conditioner (3) to execute the antifogging operation for the front windshield (22) without using a sensor signal from a humidity sensor in the vehicle cabin (21).

13. A vehicle such as an automobile, the vehicle (2) comprising an air conditioning control apparatus (1; 10) as defined in anyone of claims 10 to 12.

14. The vehicle of claim 13, wherein the vehicle (2) is a battery electric vehicle (BEV) or a plug-in hybrid vehicle (PHEV), and comprises an electric heater for heating air blown into the vehicle cabin (21).

FIG. 1

$Wair = V0 + Vp + Vin - Vout - Vc$

VENTILATION AMOUNT (ISIDE/OUTSIDE AIR RATIO, THE NUMBER OF BLOWER STAGES)

1

**CONTROL UNIT**

| STORAGE SECTION | ~41 |

| ABSOLUTE HUMIDITY ESTIMATION SECTION | ~42 |

| DEW POINT CALCULATION SECTION | ~43 |

| ANTIFOGGING DETERMINATION SECTION |

4    44

51 NUMBER-OF-OCCUPANTS SENSOR

52 OUTSIDE AIR ABSOLUTE HUMIDITY SENSOR

54 CONDENSATION AMOUNT SENSOR

53 TEMPERATURE SENSOR

3

**AIR CONDITIONER**

| 33 | DEFROSTER OUTLET PORT DOOR |
| 34 | VEHICLE CABIN OUTLET PORT DOOR |
| 37 | SWITCHING VALVE |
| 38 | BLOWER |
| 39 | HEATER |

# FIG. 2

FIG. 3

**FIG. 4**

**FIG. 5**

FIG. 6

START

S71 → READ SENSOR VALUES

S72 → OBTAIN FIRST PARAMETER

S73 → OBTAIN SECOND PARAMETER

S74 → CALCULATE ABSOLUTE HUMIDITY IN VEHICLE CABIN

S75 → CALCULATE DEW POINT Y

S76 → OBTAIN TEMPERATURE Tw OF WINDOW

S77 → Y > Tw ?

No → S79 NORMAL OPERATION

Yes → S78 ANTIFOGGING OPERATION

RETURN

FIG. 7

**FIG. 8**

$$W_{air} = V0 + Vp + Vin - Vout - Vc$$

EP 4 603 309 A1

FIG. 9

START

S101

READ SENSOR VALUES

S102

OBTAIN FIRST PARAMETER

S103

OBTAIN SECOND PARAMETER

S104

CALCULATE AMOUNT OF WATER VAPOR Wair IN VEHICLE CABIN

S105

CALCULATE SATURATED WATER VAPOR AMOUNT Wh NEAR WINDOW

S106

CALCULATE WATER ABSORPTION AMOUNT OF ANTIFOGGING FILM

S107

WATER ABSORPTION AMOUNT OF ANTIFOGGING FILM > SATURATED MOISTURE AMOUNT OF ANTIFOGGING FILM?

No

Yes

S108

DEHYDRATION OPERATION

S109

NORMAL OPERATION

RETURN

# FIG. 10

Europäisches
Patentamt

European
Patent Office

Office européen
des brevets

# EUROPEAN SEARCH REPORT

**Application Number**

EP 25 15 1838

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2015/036833 A1 (TOYOTA MOTOR CO LTD [JP]) 19 March 2015 (2015-03-19) | 1-3,6-14 | INV. B60H1/00 |
| Y | * paragraphs [0029] - [0036]; figures 3,5 | 4 | |
| A | * | 5 | |
| | ----- | | |
| A | EP 1 132 226 B1 (VALEO ELECTRONIQUE [FR]) 27 May 2009 (2009-05-27) * paragraphs [0054] - [0064]; claims; figures 1-4 * | 1-14 | |
| | ----- | | |
| Y | US 2018/029563 A1 (BELOE NEIL [GB] ET AL) 1 February 2018 (2018-02-01) * paragraphs [0004], [0009], [0121]; figures * | 4 | |
| | ----- | | |
| A | JP 7 164656 B2 (HONDA MOTOR CO LTD) 1 November 2022 (2022-11-01) * the whole document * | 4,5 | |
| | ----- | | |

**TECHNICAL FIELDS SEARCHED (IPC)**

B60H

The present search report has been drawn up for all claims

| Place of search | Date of completion of the search | Examiner |
|---|---|---|
| Munich | 23 June 2025 | Chavel, Jérôme |

## ANNEX TO THE EUROPEAN SEARCH REPORT
## ON EUROPEAN PATENT APPLICATION NO.

EP 25 15 1838

This annex lists the patent family members relating to the patent documents cited in the above-mentioned European search report.
The members are as contained in the European Patent Office EDP file on
The European Patent Office is in no way liable for these particulars which are merely given for the purpose of information.

23-06-2025

| Patent document cited in search report | Publication date | Patent family member(s) | Publication date |
|---|---|---|---|
| WO 2015036833 A1 | 19-03-2015 | JP 2015054688 A<br>WO 2015036833 A1 | 23-03-2015<br>19-03-2015 |
| EP 1132226 B1 | 27-05-2009 | EP 1132226 A1<br>FR 2806037 A1<br>JP 2001318168 A<br>US 2001032470 A1 | 12-09-2001<br>14-09-2001<br>16-11-2001<br>25-10-2001 |
| US 2018029563 A1 | 01-02-2018 | EP 3268240 A1<br>US 2018029563 A1<br>WO 2016142412 A1 | 17-01-2018<br>01-02-2018<br>15-09-2016 |
| JP 7164656 B2 | 01-11-2022 | CN 115139984 A<br>JP 7164656 B2<br>JP 2022155792 A | 04-10-2022<br>01-11-2022<br>14-10-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012035689 A
- JP 2019026046 A